# EUROPÄISCHE PATENTSCHRIFT

(11) **EP 1 862 232 B1**
(45) Veröffentlichungstag und Bekanntmachung des Hinweises auf die Patenterteilung: **18.12.2013**
(21) Anmeldenummer: 07450096.8
(22) Anmeldetag: 30.05.2007
(51) Int. Cl.: B21C 23/14

(54) **Verfahren zum Herstellen eines extrudierten Profils**
Method for manufacturing an extruded profile
Procédé de fabrication d'un profilé extrudé

(30) Priorität: 31.05.2006 AT 9402006
(43) Veröffentlichungstag der Anmeldung: 05.12.2007
(73) Patentinhaber: Hammerer Aluminium Industries GmbH, 5282 Ranshofen (AT)
(72) Erfinder: Falk, Friedrich, 5280 Braunau (AT)
(74) Vertreter: Hübscher, Helmut

(56) Entgegenhaltungen:
- DE-U1- 29 706 089
- FR-A1- 2 575 709
- FR-A1- 2 843 145
- GB-A- 2 278 307
- JP-A- 8 047 713
- JP-A- 10 193 316
- US-A- 2 190 211
- US-A- 2 659 506
- US-A- 3 172 343
- US-B1- 6 434 897

## Beschreibung

Die Erfindung bezieht sich auf ein Verfahren gemäß dem Oberbegriff des Anspruchs 1 zum Herstellen eines extrudiertes Profils, insbesondere eines Bodenprofils, mit einer Trittfläche aus mit gegenseitigem Abstand nebeneinandergereihten, in Profillängsrichtung verlaufenden Rippen, die mit in einem unregelmäßigen Muster über ihre Länge verteilten Kerben versehen sind, wobei die Kerben der Rippen zwischen den Außenrippen auf den einander gegenüberliegenden Profillängsseiten außerhalb von geraden Verbindungslinien der Kerben der Außenrippen liegen und mittels eines Schneidwerkzeuges in die Rippen der Trittfläche geschnitten werden. Ein solches Verfahren ist aus DE-U-297 06 089 bekannt.

Begeh- oder befahrbare Böden, wie sie beispielsweise im Bereich der Ladefläche von Lastfahrzeugen eingesetzt werden, sind aus extrudierten Hohlkammerprofilen oder offenen Profilen aufgebaut, die eine Trittfläche aus parallelen Rippen bilden. Um die durch Längsrippen gegebene Rutschsicherheit quer zur Profillängsrichtung durch einen erhöhten Rutschwiderstand in Profillängsrichtung zu erweitern, werden die Rippen dieser Bodenprofile mit Kerben versehen, die in Querreihen angeordnet sind. Werden diese Kerben erst nachträglich in die Rippen der zu einem Boden verlegten Bodenprofile eingeschnitten, beispielsweise mit Hilfe eines Handwerkzeuges, wird die Fertigstellung des Bodens aufwendiger. Das Verlegen von Bodenprofilen, bei denen die Rippen der Trittfläche bereits mit Kerben versehen sind, macht wiederum das gegenseitige Ausrichten der Bodenprofile in Längsrichtung erforderlich, damit sich die Querreihen der Kerben über die einzelnen Bodenprofile hinweg über die Trittfläche des Bodens fortsetzen. Dies bedeutet einerseits einen erhöhten Verlegeaufwand und bringt anderseits einen größeren Verschnitt mit sich.

Werden die Kerben in einem unregelmäßigen Muster, beispielsweise durch ein Sandstrahlen mit einem grobkörnigen Strahlungsgut hergestellt (DE 297 06 089 U1), so kann ein über mehrere Bodenprofile einheitliches Erscheinungsbild sichergestellt werden, weil die Kerben der Rippen außerhalb von geraden Verbindungslinien der Kerben der Außenrippen liegen. Nachteilig ist allerdings, dass die Rutschfestigkeit der Bodenprofile beim Prägen der Kerben häufig unzureichend bleibt, das Schneiden unregelmäßiger Kerben aber aufwendig ist.

Der Erfindung liegt somit die Aufgabe zugrunde, ein Verfahren zum Herstellen eines extrudierten Profils, insbesondere eines Bodenprofils, der eingangs geschilderten Art so auszugestalten, dass einfache Herstellungsbedingungen für das Schneiden der Kerben gewährleistet werden können.

Die Erfindung löst die gestellte Aufgabe dadurch, dass das Schneidwerkzeug in einer zur Trittfläche parallelen, in Profillängsrichtung relativ zur Trittfläche bewegten Kreisbahn geführt wird.

Die sich der Kreisbahn des Schneidwerkzeuges überlagernde Vorschubbewegung relativ zum Bodenprofil bedingt Schneidbahnen, die nicht nur die angestrebte unregelmäßige Verteilung der Kerben über die Trittfläche unter Vermeidung einer Kerbenanordnung entlang gerader Linien sicherstellt, sondern zusätzlich unterschiedliche Schnittwinkel zwischen der Schneidbahn des Schneidwerkzeuges und den einzelnen Rippen mit sich bringt, sodass die Ausrichtung der in Richtung der Schneidbahn verlaufenden Kerben variiert, was die Rutschfestigkeit in unterschiedlichen Richtungen verbessert.

Damit die Erstreckung der Kerben in Längsrichtung der Rippen begrenzt wird, kann das Schneidwerkzeug in einer Kreisbahn mit einem die Breite der Trittfläche übersteigenden Durchmesser geführt werden. In diesem Fall werden schleifende Schnitte zwischen der Schneidbahn des Schneidwerkzeuges und den Rippen und damit Kerben vermieden, die aufgrund eines kleinen Winkels zur Längsrichtung der Rippen eine vergleichsweise große Erstreckung in Rippenlängsrichtung aufweisen.

In der Zeichnung ist der Erfindungsgegenstand beispielsweise dargestellt. Es zeigen
- Fig. 1: ein nach dem erfindungsgemäßen Verfahren hergestelltes, extrudiertes Bodenprofil in einem vereinfachten Querschnitt,
- Fig. 2: das Bodenprofil nach der Fig. 1 in einem Schnitt nach der Linie II-II der Fig. 1 und
- Fig. 3: eine Draufsicht auf dieses erfindungsgemäße Bodenprofil.

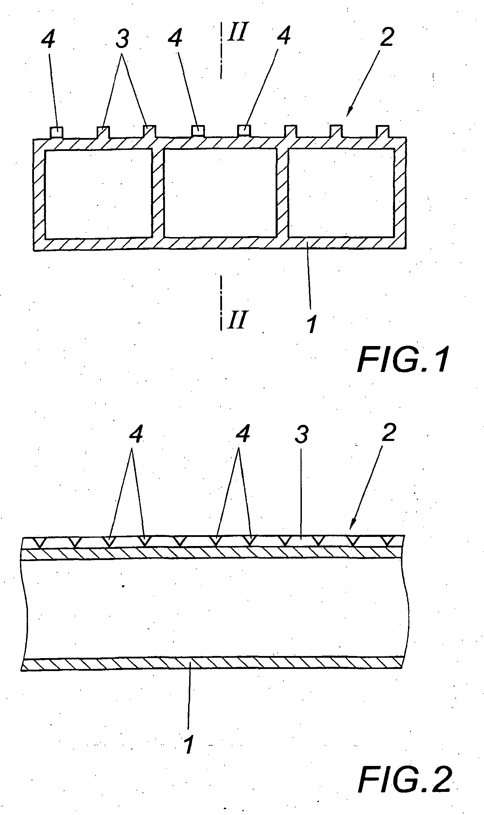

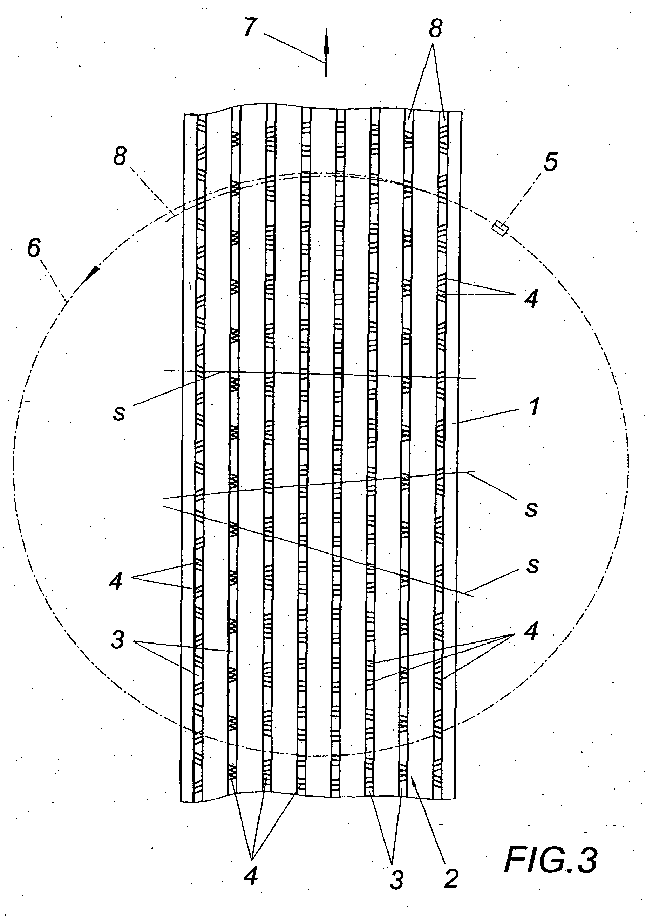

Das Bodenprofil nach den Fig. 1 bis 3 besteht aus einem extrudierten Hohlkammerprofil 1, vorzugsweise aus einem Aluminiumwerkstoff, aber auch aus Kunststoff, und bildet eine Trittfläche 2 aus in Profillängsrichtung verlaufenden, mit gleichmäßigem Abstand nebeneinandergereihten Rippen 3. Aufgrund dieser Rippen 3 ergibt sich eine gute Rutschfestigkeit für einen aus solchen Profilen verlegten Boden quer zur Profillängsrichtung. Damit auch eine entsprechende Rutschfestigkeit in anderen Richtungen sichergestellt werden kann, sind die Rippen 3 mit Kerben 4 versehen. Die Kerben 4 bilden dabei ein über die Trittfläche 2 unregelmäßig verteiltes Muster, wie sich dies insbesondere aus der Fig. 3 ergibt. Die Unregelmäßigkeit der Kerbenverteilung soll gewährleisten, dass die Kerben 4 nicht entlang von geraden Verbindungslinien s vorgesehen sind, die zwischen Kerben 4 der äußeren Rippen auf den beiden Längsseiten des Bodenprofils gezogen werden können, sodass sich auch keine geraden optischen Linien innerhalb des Musters der Kerbenverteilung erkennen lassen. Dies bedeutet, dass Bodenprofile in einer beliebigen gegenseitigen Längsstellung nebeneinander verlegt werden können, ohne auf einzelne Bodenprofile beschränkte, gegeneinander abgesetzte Abschnitte des sich aus der Kerbenverteilung über die Trittfläche des verlegten Bodens ergebenden Musters befürchten zu müssen.

Zur Herstellung der in einem entsprechenden Muster über die Trittfläche 2 des Bodenprofils verteilten Kerben 4 kann gemäß der Fig. 3 ein rotierendes Schneidwerkzeug 5 eingesetzt werden, das in einer Kreisbahn 6 geführt wird, deren Achse senkrecht zur Trittfläche 2 verläuft. Da sich der Kreisbahn 6 des Schneidwerkzeuges 5, das auch als Fräswerkzeug oder als ein anderes spanabhebendes Werkzeug ausgebildet sein kann, eine relative Vorschubbewegung 7 zwischen dem Hohlkammerprofil 1 und der rotierenden Schneidvorrichtung überlagert, ergibt sich eine von der Kreisform abweichende Schneidbahn 8 für das Schneidwerkzeug 5 gegenüber der Trittfläche 2, sodass die Kerben 4 entlang von sich wiederholenden Schneidbahnästen in die Rippen 3 eingeschnitten werden. Aufgrund dieser Schneidbahnäste stellt sich nicht nur eine ungleichmäßige Verteilung der Kerben 4 über die Trittfläche 2 ein, sondern auch eine ungleichmäßige Ausrichtung der Kerben 4 gegenüber dem Längsverlauf der Rippen 3, was die Rutschfestigkeit der Bodenprofile verbessert.

Die Erfindung ist selbstverständlich nicht auf die dargestellten Ausführungsbeispiele beschränkt. So könnten anstelle der Hohlkammerprofile 1 auch offene Profile mit Längsrippen zum Einsatz kommen. Die in der Zeichnung dargestellten V-förmigen Kerben 4 können durch Kerben mit einem rechteck- oder trapezförmigen Querschnitt ausgebildet sein. Es kommt ja nicht auf den Kerbenquerschnitt, sondern auf die unregelmäßige Verteilung der Kerben über die Trittfläche 2 an.

## Patentansprüche

1. Verfahren zum Herstellen eines extrudierten Profils, insbesondere eines Bodenprofils, mit einer Trittfläche (2) aus mit gegenseitigem Abstand nebeneinandergereihten, in Profillängsrichtung verlaufenden Rippen (3), die mit in einem unregelmäßigen Muster über ihre Länge verteilten Kerben (4) versehen sind, wobei die Kerben (4) der Rippen (3) zwischen den Außenrippen auf den einander gegenüberliegenden Profillängsseiten außerhalb von geraden Verbindungslinien (s) der Kerben (4) der Außenrippen liegen und mittels eines Schneidwerkzeuges in die Rippen der Trittfläche geschnitten werden, **dadurch gekennzeichnet, dass** das Schneidwerkzeug (5) in einer zur Trittfläche (2) parallelen, in Profillängsrichtung relativ zur Trittfläche (2) bewegten Kreisbahn (6) geführt wird.

2. Verfahren nach Anspruch 1, **dadurch gekennzeichnet, dass** das Schneidwerkzeug (5) in einer Kreisbahn (6) mit einem die Breite der Trittfläche (2) übersteigenden Durchmesser geführt wird.

## Claims

1. Method for producing an extruded profile, in particular a ground profile, having a footstep surface (2) consisting of ribs (3) which are arranged next to one other at a mutually spaced interval, extend in the profile longitudinal direction and are provided with notches (4) which are distributed in an irregular pattern over their length, wherein the notches (4) of the ribs (3) lie between the outer ribs on the mutually opposite profile longitudinal sides outside of straight connection lines (s) of the notches (4) of the outer ribs and are cut into the ribs of the footstep surface by means of a cutting tool, **characterised in that** the cutting tool (5) is guided in a circul path (6) which is in parallel with the footstep surface (2) and moves in the profile longitudinal direction relative to the footstep surface (2).

2. Method as claimed in claim 1, **characterised in that** the cutting tool (5) is guided in a circular path (6) having a diameter which exceeds the width of the footstep surface (2).

## Revendications

1. Procédé pour fabriquer un profilé extrudé, en particulier un profilé de sol, avec un plan de marche (2), constitué de nervures (3), disposées dans le sens longitudinal du profilé et alignées côte à côte à une distance mutuelle, qui sont pourvues d'entailles (4) réparties sur leur longueur avec un motif irrégulier, les entailles (4) des nervures (3) étant situées entre les nervures extérieures sur les côtés longitudinaux, situés à l'opposé l'un de l'autre, des profilés, en dehors de lignes de jonction (s) droites des entailles (4) des nervures extérieures, et coupées au moyen d'un outil de coupe dans les nervures du plan de marche, **caractérisé en ce que** l'outil de coupe (5) est guidé dans une voie circulaire (6) déplacée dans le sens longitudinal du profilé, de manière relative au plan de marche (2) et parallèle au plan de marche (2).

2. Procédé selon la revendication 1, **caractérisé en ce que** l'outil de coupe (5) est guidé dans une voie circulaire (6) avec un diamètre supérieur à la largeur du plan de marche (2).
